# EUROPEAN PATENT SPECIFICATION

(11) **EP 2 127 951 B1**
(45) Date of publication and mention of the grant of the patent: **23.03.2011**
(21) Application number: 09161115.2
(22) Date of filing: 26.05.2009
(51) Int. Cl.: B60R 5/04, B60R 7/02

(54) **Storage device for vehicles**
Aufbewahrungsvorrichtung für Fahrzeuge
Dispositif de stockage pour véhicules

(30) Priority: 26.05.2008 JP 2008136855; 04.08.2008 JP 2008201160
(43) Date of publication of application: 02.12.2009
(73) Proprietor: Honda Motor Co., Ltd., Minato-ku Tokyo 107-8556 (JP)
(72) Inventor: Nakamura, Mitsuyoshi, Saitama 351-0193 (JP); Hashimoto, Mitsufumi, Tokyo 150-8530 (JP); Mitsui, Satoru, Tokyo 150-8530 (JP)
(74) Representative: Beder, Jens

(56) References cited:
- EP-A- 1 762 435

## Description

### Technical Field

The present invention relates to a storage device for vehicles provided with a floorboard to support at an upper portion and a lower portion of a concave portion for storage in a cargo room of a vehicle.

### Background art

Conventionally, a storage device for vehicles (lid-type device), which is designed for closing a concave portion for storage provided in a floor's bottom surface of a vehicle by means of a floorboard (as also called as a lid), has been already known. (For example, referring to Japanese Unexamined Laid-Open Publication No. 2007-76401)

In the storage device for vehicles described in the above Patent Literature, a base end of a main body is through a connecting portion and a hinge (thin-film portion) connected to an attaching portion. The attaching portion is mounted on a wall of the concave portion for storage to rotatably attach the connecting portion and the main body.

When the main body moves up and down in the concave portion for storage by the rotation of the connecting portion and the main body, the position of the main body can be changed between an upper and a lower position by turning the side for connecting the wall of the main body along a fixed trajectory curve through the guidance of the connecting portion.

The main body is designed as supported by putting the base end on the convex portion projecting on the wall of the concave portion for storage at an upper position of the concave portion for storage, and by putting the base end on the bottom surface of the concave portion for storage at a lower position of the concave portion for storage.

### Problem to be dissolved by the invention

However, in the storage device for vehicles disclosed in the above Patent Literature, hinges are mounted at two positions of the floorboard. When the depth of the concave portion for storage is restrictive to be relatively shallow, the convex portion of the attaching portion becomes a hindrance, as a trajectory curve in turning of the attaching portion is small in radius at the time of upward or downward movement of the floorboard. As a result, it has a problem that the rim of an opening for inserting cannot go across the convex portion.

EP 1762435 A discloses a storage device according to the preamble of claim 1.

An object of the invention is to provide a storage device for vehicles to be able to move the floorboard at the position between an upper portion and a lower portion, even if the depth of the concave portion for storage is shallow.

### Means for solving the Problem

As a means for solving the above problem, a storage device for vehicles is provided as defined by the features of claim 1, which is provided with the floorboard as being coverable over a concave portion for storage provided in a cargo room, the storage device for vehicles is characterized in that the floorboard comprises a main body as being coverable over the concave portion for storage, and a connecting body as one end thereof being connected to a main hinge arranging at an approximately middle position in the depth direction of a wall of the concave portion for storage, and the other end thereof being connected to the main body by a hinge, so as to be supported by switching the position thereof between an upper position supported at a supporting portion formed in an upper edge side of the concave portion for storage and a lower position supported by a bottom surface side of the concave portion for storage. Further, the floorboard is combined with the cargo room as the main hinge being movable relative to the supporting portion. The connecting body comprises a first connecting body mounted in the cargo room, a second connecting body connected by a first hinge to the first connecting body, a third connecting body connected by a second hinge to the second connecting body. The main body is connected by a third hinge to the third connecting body, such that the first connecting body, the second connecting body, the third connecting body, and the main body are serially arranged. Further, the second hinge arranged between the second connecting body and the third connecting body is defined as a main hinge, and the main hinge is movable by swinging the second connecting body relative to the first connecting body.

According to the above constitution, the floorboard is supported by switching the position between an upper position supported at a supporting portion formed in an upper edge side of the concave portion for storage and a supporting portion supported by a bottom surface side of the concave portion for storage, and the floorboard is combined with the cargo room as the main hinge being movable relative to the supporting portion. Thus, the floorboard is movably combined with the cargo room at two positions between the upper position and the lower position of the concave portion to be changeable in space of the concave portion for storage. The floorboard is constituted to be serially arranged through the hinges, respectively, among the first connecting body mounted to the cargo room, the second connecting body, the third connecting body, and the main body. Then, the floorboard can go up or down in folding up or stretching the second connecting body and the third connecting body. The main body can be switched to shift an upper position or a lower position of the concave portion for storage by folding up or stretching the second connecting body and the third connecting body.

In the invention of the storage device for vehicles described in Claim 2, the second connecting body and the third connecting body are downwards bendably connected by the main hinge so as to overlap an upper surface of the second connecting body and an upper surface of the third connecting body at the time of bending.

According to the above constitution, the second connecting body and the third connecting body are connected by the main hinge to be downwards bendable so as to overlap the upper surface of the second connecting body and the upper surface of the third connecting body each other. Accordingly, the main body is supported at an upper position such that the plane between the upper surface of the main body and the floor's bottom surface of the cargo room form a common plane.

In the invention of the storage device for vehicles described in Claim 3, an opening for inserting a support table is provided astride the second connecting body and the third connecting body.

According to the above constitution, the second connecting body and the third connecting body are provided with openings for inserting the support table. Thus, the support table can support the end of the main body.

The floorboard is provided with openings for inserting the support table in the second connecting body and the third connecting body. In switching to shift an upper position and a lower position of the floorboard, the support table would not become a hindrance, as the opening receives the support table so as to avoid the crash therebetween.

The opening is formed astride the second connecting body and the third connecting body, as the second connecting body and the third connecting body rotate. Then, the floorboard can be shifted between an upper portion and a lower portion, in a case where the depth enough to shift the floorboard cannot be obtained in the area ranging between the upper position and the lower position of the concave portion for storage.

In the invention of the storage device for vehicles described in Claim 4, a fitting portion fitting in a fitting groove of a main body is provided in an inner bottom surface of the concave portion for storage.

According to the above constitution, the concave portion for storage is provided with the fitting portion of the fitting groove of the main body. Then, the fitting portion is fitted in the fitting groove, when the main body is displaced in the inner bottom surface of the concave portion for storage. As a result, the floorboard can be supported without wobbling, even if the floorboard is put at any position other than the prescribed position.

In the invention of the storage device for vehicles described in Claim 5, a holding portion of the third connecting body is provided on an inner wall of the concave portion for storage or the second connecting body.

According to the above construction, the lower surface of the third connecting body is held at the holding portion of the concave portion for storage. Then, the main body can be held at the prescribed position in height, even if the floorboard is not put on at the prescribed position relative to the cargo room of a vehicle.

In the invention of the storage device for vehicles described in Claim 6, the invention is characterized in that the engaging portion of the holding portion is provided on the upper surface of the third connecting body.

According to the above constitution, the floorboard is provided with the engaging portion of the holding portion on the upper surface of the third connecting body. Then, the main body does not drop down in the lower direction and is easy to handle, at the time when the position of the main body is switched to shift an upper position and a lower position.

According to the storage device for vehicles relating to the present invention, the floorboard can be shifted between the upper position and the lower position of the concave portion for storage, even though the depth of the concave portion for storage is shallow.

### Brief description of the Drawings

Fig. 1 is a perspective view of the rear portion of a vehicle showing the storage device for vehicles relating to an embodiment of the present invention.
Fig. 2 is a view showing the storage device for vehicles relating to an embodiment of the present invention, and an exploded perspective view of the floorboard and the concave portion for storage as developed.
Fig. 3 is a view in a case where the floorboard of the concave portion for storage relating to an embodiment of the present invention is displaced at an upper position, Fig. 3A is an enlarged cross-sectional view in the direction of an arrow as taken through Line A-A, and Fig. 3B is an enlarged view at Portion B of Fig. 3A.
Fig. 4 is a view in a case where the floorboard of the concave portion for storage relating to an embodiment of the present invention is displaced at a lower position, Fig. 4A is an enlarged central longitudinal cross-sectional view of the floorboard, and Fig. 4B is an enlarged view at Portion C of Fig. 4A.
Fig. 5 is a view showing an assembling structure of the front position of the concave portion for storage of the storage device for vehicles relating to an embodiment of the present invention. Fig. 5A is an exploded perspective view, and Fig. 5B is a perspective view.
Fig. 6 is a view showing the storage device for vehicles relating to an embodiment of the present invention, and is a perspective view of the floorboard as seen from the bottom surface side.
Fig. 7 is an essential portion of enlarged side view showing the floorboard as seen in the direction of an arrow D of Fig. 6, Fig. 7A is a view showing the floorboard as developed,
Fig. 7B is a view showing the condition as bent to pile the second connecting board and the third connecting board, and Fig. 7C is a view showing the floorboard displaced at an upper position.
Fig. 8D is an essential portion of enlarged side view showing the condition, in a case where the engaging portion is released from the holding portion as seen from the direction of an arrow D of Fig. 6, and Fig. 8E is an essential portion of enlarged side view showing the floorboard displaced at a lower position.
Fig. 9 is a view showing the storage device for vehicles relating to an embodiment of the present invention, and a perspective view showing the floorboard in use displaced at an upper position.
Fig. 10 is a view showing the relationship between the opening of the floorboard and the support in the storage device for vehicles relating to an embodiment of the present invention. Fig. 10A is an essential portion of exploded perspective view showing the floorboard as exploded. Fig. 10B is an essential portion of perspective view showing the floorboard, and Fig. 10C is an essential portion of perspective view showing the floorboard displaced at a lower position.
Fig. 11 is a modification of the storage device for vehicles relating to an embodiment of the present invention, Fig. 11A is an essential portion of enlarged perspective view showing the floorboard displaced at a lower position, and Fig. 11B is an essential portion of enlarged perspective view showing the floorboard displaced at an upper position.

### Detailed Description of the Invention

Hereinafter, an example of a storage device for vehicles relating to an embodiment of the present invention will be described as referring to the attached drawings.

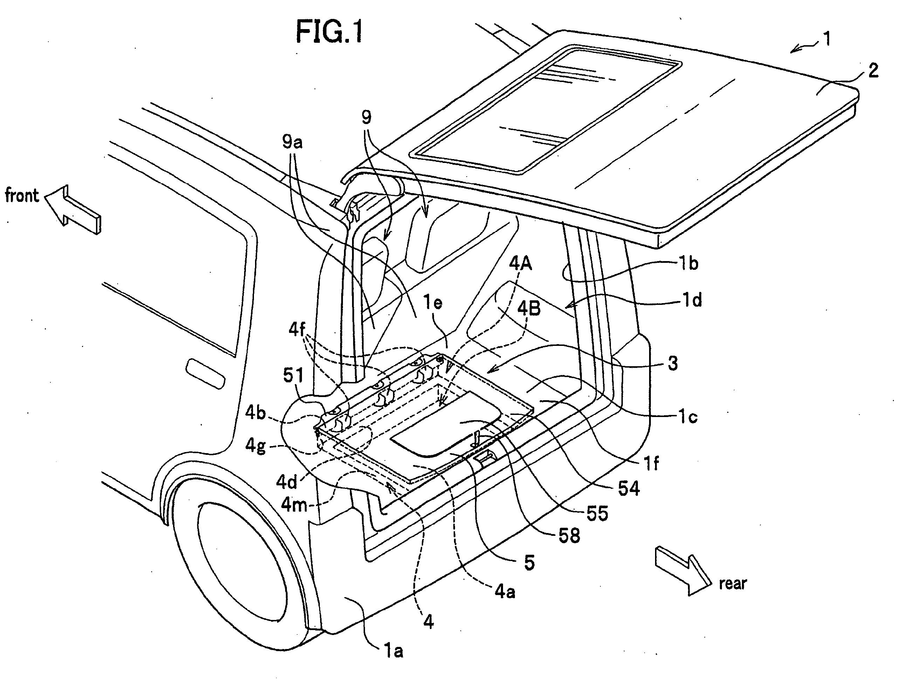

Fig. 1 shows a perspective view of a rear portion of a vehicle showing the storage device for vehicles relating to an embodiment of the present invention. In the embodiment of the invention, "front" means the front side of a vehicle 1, "rear" means the rear side of a vehicle 1, "upper" means the upper side in the vertical direction, and "lower" means the lower side in the vertical direction.

The below-describing connecting board will be hereinafter described as an example of the connecting body. That is, a first connecting board, a second connecting board, or a third connecting board means a first connecting body, a second connecting body, or a third connecting body, respectively.

### Constitution of a vehicle

Before the storage device for vehicles 3 relating to an embodiment of the invention is described, a vehicle 1 applying the storage device for vehicles 3 will be described as referring to Fig. 1.

The vehicle 1 has a door opening 1b in the rear end 1a thereof, and is an automobile provided with a door 2 supporting the door opening 1b in an openable or closable way. For example, the vehicle 1 is hatch-back-type, wagon-type, coupé-type, and the like. The vehicle 1 is provided with a cargo room 1d having a below-described storage device for vehicles 3 in the space between the door opening 1b and a rear seat 9. If the vehicle 1, for example, falls down a seat back such as the rear seat 9 in the front, a floor's bottom surface 1c is designed for communicating the spaces both in the side of the cargo room 1d and in the side of the cabin.

The vehicle 1 may be any kind of vehicle body which has the door opening 1b and the cargo room 1d.

The door opening 1b is an opening as opened or closed by a back door, a side door, a trunk, and the like. Hereinafter, a case where the opening is opened or closed by the door 2 of back-door type will be described as an example thereof.

The cargo room 1d is the space to form spaces for loading or storing cargos in a vehicle 1. The cargo room 1d is provided, for example, with the door opening 1b, the door 2 for opening or closing the door opening 1b, a floor's bottom surface 1c in the rear portion of the vehicle 1, the storage device for vehicles 3, a concave portion for storage 4 as formed in the floor's bottom surface 1c, a floorboard 5 to be able to close the concave portion for storage 4 in the rear portion 1a of the vehicle 1.

As shown in Fig. 1, the floor's bottom surface 1c is a floor surface of the storage device for vehicles 3 and a cargo room 1d to be continuously formed, for example, in the floor surface of the cabin. The floor's bottom surface 1c is provided with the concave portion for storage 4 and the floorboard 5.

The door 2 may be any kind of door which closes the door opening 1b. The door 2 may be a double door that opens together on hinge, a sliding door, a hinge-type door to open in the lateral direction, a hinge-type door of spring-up type, trunk, and the like. Hereinafter, a hinge-type door of spring-up type will be described as an example thereof.

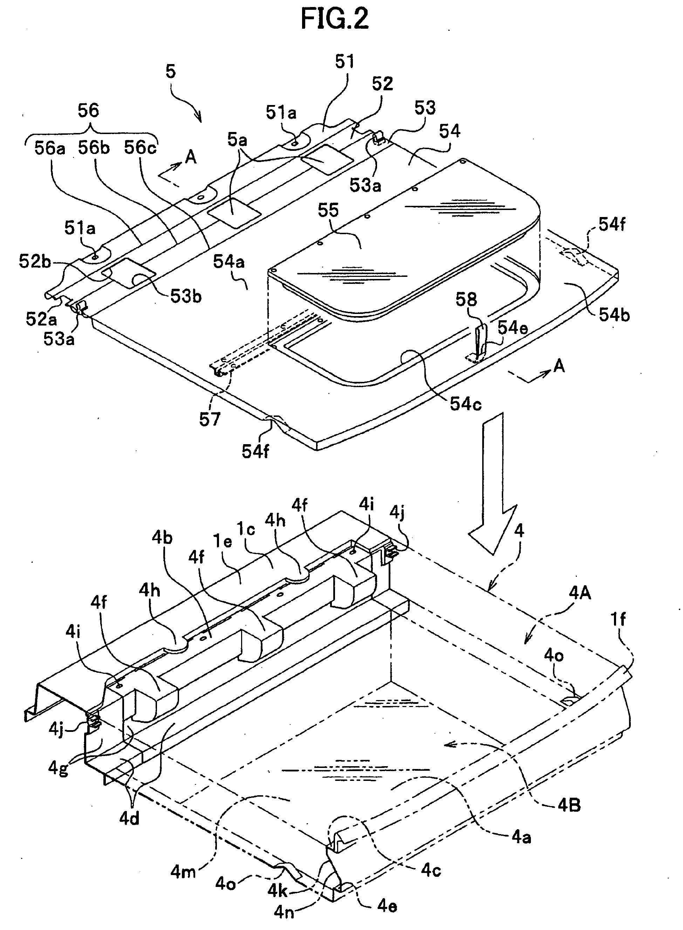

Fig. 2 is a view showing the storage device for vehicles relating to an embodiment of the invention, and an exploded perspective view of the floorboard and the concave portion for storage as being unfolded.

### Constitution of storage device for vehicles

As shown in Fig. 1, the storage device for vehicles 3 is an apparatus, which can store cargos such as small things and tools in the concave portion for storage 4 to close it by the floorboard 5, and load cargos on the floorboard 5. The storage device for vehicles 3 is provided with the concave portion for storage 4 mounted in the floor's bottom surface 1c of the cargo room 1d, and the floorboard 5 as supported by a front and upper support 4b and a rear and upper support 4c of the concave portion for storage 4 (as referred to Fig. 2) and a front and lower support 4d and rear and lower support 4e in the concave portion for storage 4 (as referred to Fig. 2).

### Constitution of concave portion for storage

As shown in Fig. 1, the concave portion for storage 4 forms the space for storing relatively small cargos to be a so-called closet for storing the cargos under floor. The concave portion for storage 4 ranges from a cargo front end 1e to a cargo rear end 1f of the cargo room to form the space for storage, as being hollow in the lower of the floor's bottom surface 1c and formed of approximately quadrangular prism. Inner walls and an inner bottom surface 4m are made of synthetic plastic plates, so that the concave portion for storage 4 is arranged in the upper of the floor panel (as not shown) made of, e.g., metallic plate member. The concave portion for storage 4 forms the below-described front and lower support 4d and rear and lower support 4e at the middle position inside the concave portion for storage 4 to put the main body 54 of the below-described floorboard 5 on the front and lower support 4d and the rear and lower support 4e, thus to separate the concave portion for storage 4 into the upper concave portion for storage 4A and the lower concave portion for storage 4B.

As shown in Fig. 2, the concave portion for storage 4 is provided with the opening 4a, the front and upper support 4b, the rear and upper support 4c, the front and upper support 4d, the rear and lower support 4e, a support table 4f, the front inner wall 4g, a projection slip 4h, a fixed hole 4i, a holding portion 4j, a rear inner wall 4k, an inner bottom surface 4m, a notched portion 4n, and a fitting portion 40. In a case where cargos are put on the concave portion for storage 4, it will be closed by the floorboard 5 to arrange the cargos on the floorboard 5. In a case where cargos are stored in the concave portion for storage 4, the below-described main body 54 or a child lid 55 will be opened to take cargos in or out the concave portion for storage 4 therethrough.

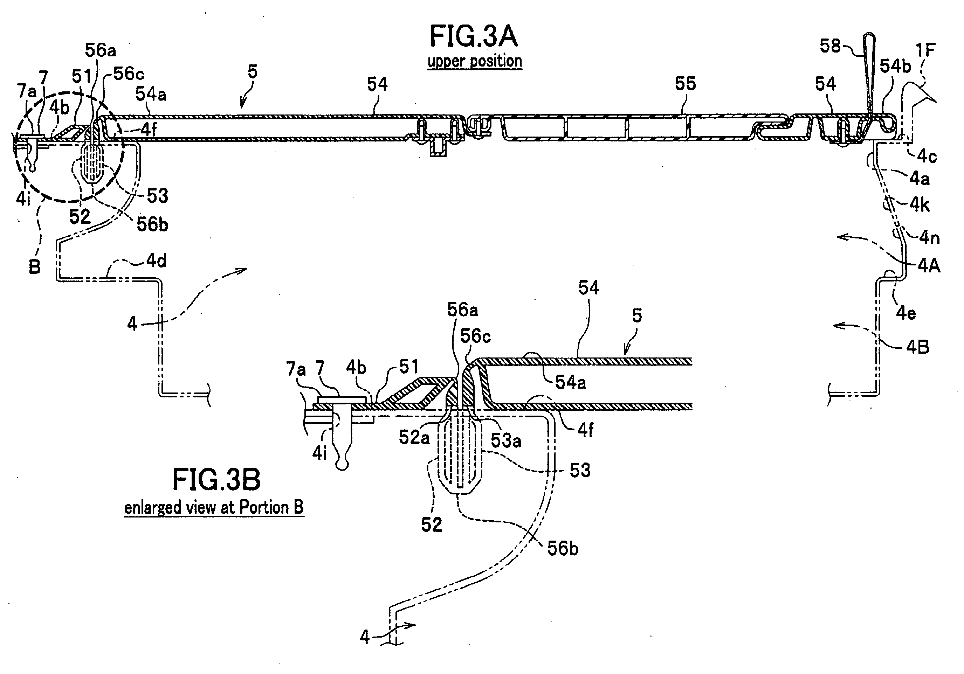

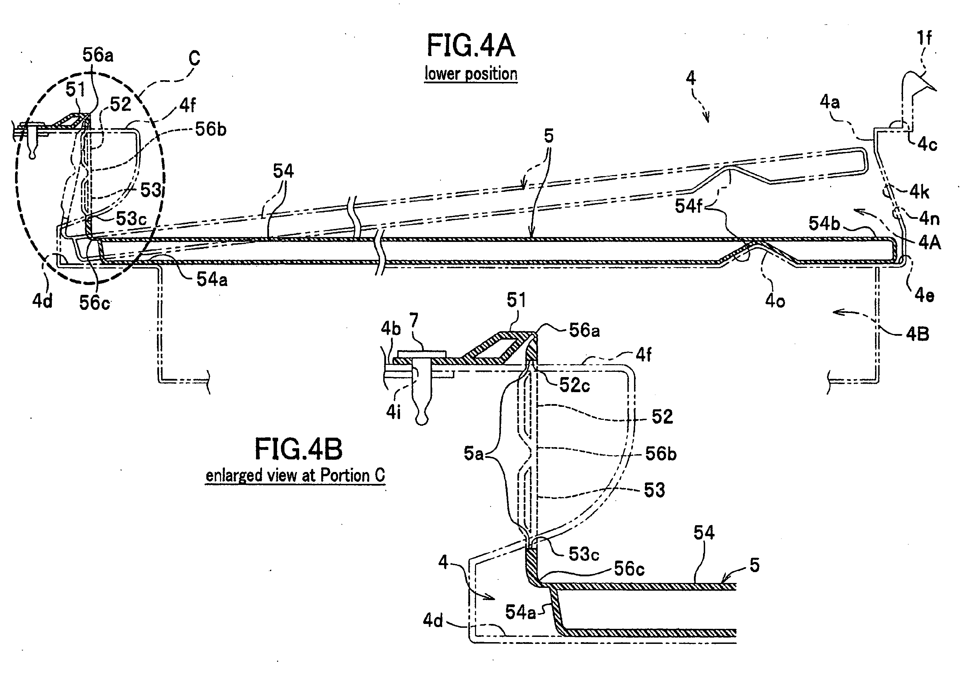

Fig. 3 is a view showing an arrangement at an upper position of the floorboard of the concave portion for storage relating to an embodiment of the invention. Fig. 3A is an enlarged cross-sectional view in the direction of an arrow taken along Line A-to-A of Fig. 2. Fig. 3B is an enlarged view at a portion B in Fig.3A. Fig. 4 is a view showing an arrangement at a lower position of the floorboard of the concave portion for storage relating to an embodiment of the invention. Fig. 4A is a central enlarged longitudinal cross-sectional view of the floorboard. Fig. 4B is an enlarged view at a portion C in Fig. 4A.

### Constitution of the upper concave portion for storage

As shown in Fig.2 to Fig.4, the upper concave portion for storage 4A is an upper portion for storage in the concave portion for storage 4, which is of two-step construction. In a lower-position case where the main body 54 is put on the front and lower support 4d and rear and lower support 4e, an upper surface of the main body 54 forms a bottom surface of the upper concave portion for storage 4A, thus to form the lower concave portion for storage 4B below the floorboard 54.

### Constitution of the lower concave portion for storage

The lower concave portion for storage 4B is a lower portion for storage formed on the inner bottom surface 4m of the concave portion for storage 4. In an upper-position case where the floorboard 54 is put on the front and upper support 4b and the rear and upper support 4c of the concave portion for storage 4, the lower concave portion for storage 4B communicates to the upper concave portion for storage 4A to form a large amount of space for storage. The lower concave portion for storage 4B is able to store e.g. spare tires therein.

### Constitution of opening

As shown in Fig. 2, the opening 4a is a portion for putting cargos in or out the concave portion for storage 4 to form a rectangular shape as seeing to the plane. The opening 4a is formed between the front end of cargos 1e and the rear end of cargos 1f of the floor's bottom surface 1c, as referred to Fig. 1 as seen from the side.

### Constitution of the front and upper support

As shown in Fig. 2 and Fig. 3A and 3B, the front and lower support 4b is at a position for supporting to put the first connecting board 51 of the below-described floorboard 5. As shown in Fig. 2, the front and upper support 4b is at a step-shape position formed in the upper portion of the front end of the opening 4a to be evenly formed at a one-step lower position from the front end 1e of the cargo room of the floor's bottom surface 1c. The front and upper support 4b is provided with the support table 4f as formed to be even with the front and upper support 4b, the projection slip 4h, and the fixed hole 4i.

### Constitution of the rear and upper support

As shown in Fig. 2 and Fig. 3A, the rear and upper support 4c will be at a position for supporting to put the rear end 54b of the floorboard 5 (the main body 54) on, in a case where the floorboard 5 (the main body 54) is displaced at an upper position of the concave portion for storage 4. The rear and upper support 4c is formed to be of step-shape at the approximately same height as the upper surface of the front upper support 4b and the support table 4f.

### Constitution of the front and lower support

As shown in Fig. 2 and Fig. 4A and 4B, the front and lower support 4d is at a position for supporting to put the front end 54a of the main body 54 on, in a case where the floorboard 5 is displaced at a lower position of the concave portion for storage 4. As shown in Fig. 2, the front and lower support 4d is formed to be of step-shape or to be even in the front inner wall 4g between the front and upper support 4b and the inner bottom surface 4m.

### Constitution of the rear and lower support

As shown in Fig. 2, the rear and lower support 4e is at a position for supporting the rear end 54b of the floorboard 54, in a case where the floorboard 5 is displaced at a lower position of the concave portion for storage 4. The rear and lower support 4e is formed to be of step-shape, as opposed to the front and lower support 4d, in the rear inner wall 4k at the same position in height as the front and lower support 4d in the concave portion for storage 4.

### Constitution of the front inner wall

As shown in Fig. 2, the front inner wall 4g is a side wall of the front portion of the concave portion for storage 4. The below-described support table 4f and holding portion 4j are mounted on the upper portion in the front inner wall 4g and the front and lower support 4d is mounted in the lower portion thereof. Herein, the front inner wall 4g and the below-described rear inner wall 4k correspond to an inner wall described in the claim.

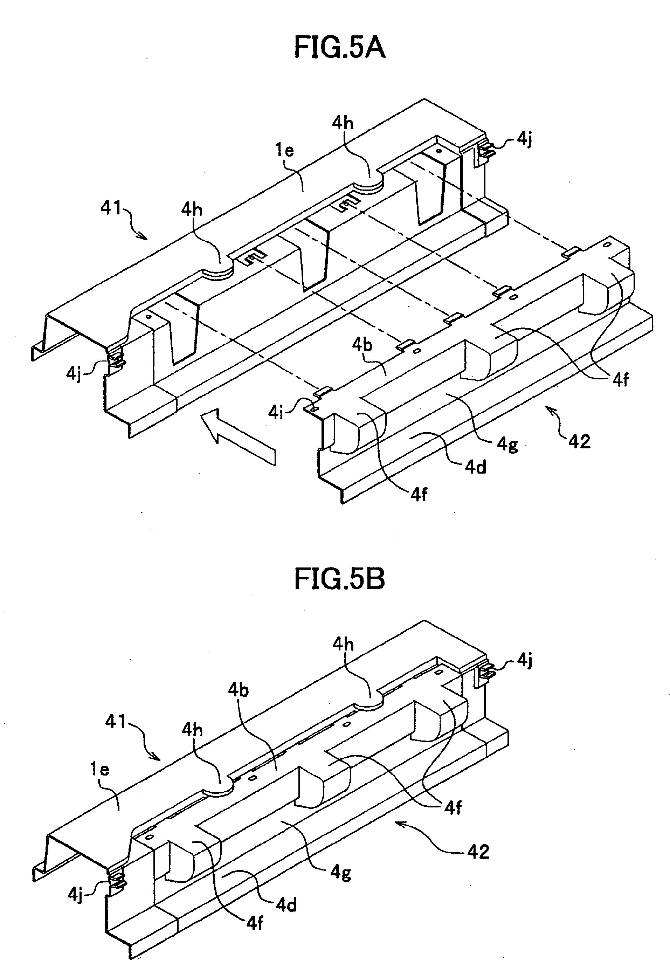

Fig. 5 is a view showing an assembling structure of the front portion of the concave portion for storage of the storage device for vehicles relating to the invention. Fig. 5A is an exploded perspective view and Fig. 5B is a perspective view.

The front and upper support 4b, the front inner wall 4g, and support table 4f, as shown for example in Fig. 5A and 5B, is formed to assemble a cover body 41 as folded in a approximately U-shape (Japanese letter "⊐"-shape) seeing from the side and extending in the width of vehicle, and a side cover 42 as set in the rear end of the cover body 41 and extending in the width of vehicle.

The front end of cargo room 1e and a projection slip 4h are formed on the cover body 41, and the holding portion 4j is formed in the side of the cover body 41. The front and upper support 4b and the support table 4f are formed on the side cover 42, and the support table 4f, the front inner wall 4g, and the front and lower support 4d are formed in the side of the side cover 42.

### Constitution of the support

As shown in Fig. 3A and B, the support table 4f is at a position for supporting the front end 54a of the main body 54, in a case where the main body 54 of the floorboard 5 is displaced at an upper position of the opening 4A. The support table 4f is composed of a projection slip in a prism shape projected from the upper end of the front inner wall 4g to the side of the rear and upper support 4c, to be formed to be horizontal as continuing to the front and upper support 4b. The support table 4f is formed to support the main body 54, even though heavy cargos are loaded on the main body 54 as displaced at an upper position.

As shown in Fig. 4A and B, in a case where the main body 54 is displaced at a lower position by facing downwards the below-described second hinge 56b of the floorboard 5 and overlapping the upper face of the second connecting board 52 and the upper face of the third connecting board 53, one opening 5a in the floorboard 5 is designed for mutually communicating to the other opening 5a in the floorboard 5.

### Constitution of the projection slip

As shown in Fig. 2, the projection slip 4h is a thin-plate projection for holding by pinching the first connecting board 51 mounting on the front and upper support 4b together with the front and upper support 4b. A plurality of the projection slips 4h are disposed so as to be the same plane ranging from the front end of cargo room 1e to the rear end of cargo room 1f of the concave portion for storage 4 as the floor's bottom surface 1c.

### Constitution of the fixed hole

As shown in Fig. 2, the fixed hole 4i is a hole as equipped with a pin 7a, which is a securing means 7 (as referred to Fig. 3) for securing the first connecting board 51 of the floorboard 5 in the vehicle body. A plurality of the fixed holes 4i are mounted in an appropriate interval in the front and upper support 4b.

### Constitution of the holding portion

The holding portion 4j is a member for holding the third connecting board 53 by engaging with the engaging portion 53a, in a case where the second connecting board 52 and the third connecting board 53 are folded to overlap each other.
The holding portion 4j projects at either end of the front inner wall 4g such that the engaging portion 53a of either end of the third connecting board 53 is respectively composed of clip-shape projection for enabling to engage and detach. The holding portion 4j is constituted by an elastic slip for holding the upper surface of the engaging portion 53a from the upper side and an elastic slip for holding the lower surface of the engaging portion 53a from the lower side.

### Constitution of the rear inner wall and the notched portion

As shown in Fig. 2, the rear inner wall 4k of the concave portion for storage 4 is provided with the below-described rear and upper support 4c in the upper side, the below-described rear and lower support 4e, and the notched portion 4n between the rear and upper support 4c and the rear and lower support 4e.

The notched portion 4n is formed by notching the upper side of the rear and lower support 4e of the rear inner wall 4k so as to enable to put the main body 54 on the rear and lower support 4e by forming the rear and lower support 4e under the rear and upper support 4c.

### Constitution of the inner bottom surface and the fitting portion

As shown in Fig. 2, the inner bottom surface 4m is a bottom surface for putting cargos stored under floor in the lower concave portion for storage 4B of the inner concave portion for storage 4, in a case where the floorboard 5 is displaced at an upper position of the concave portion for storage 4. The inner bottom surface 4m is formed by a flat bottom surface formed at a lowest end.

The inserting portion 4o is a chevron-shape convex portion formed at left and right ends of the inner bottom surface 4m, and a position for supporting the main body 54 on the inner bottom surface 4m by inserting into the below-described fitting groove 54f of the main body 54.

### Constitution of the floorboard

As shown in Fig. 2, the floorboard 5 functions as a lid member for closing the opening 4a of the concave portion for storage 4 and as a floor member of the cargo room 1d loading the cargos on the floorboard 5 as displaced at an upper position. The floorboard 5 functions as a floor member of the upper concave portion for storage 4A loading cargos and as a lid member for closing the upper side of the lower concave portion for storage 4B in case of a lower position displaced at the middle of the concave portion for storage 4. The floorboard 5 is arranged in series among the first connecting board 51 secured to the cargo room 1d, the second connecting board 52, the third connecting board 53, and the main body 54 having the child lid 55. The floorboard 5 is, for example, composed of the first connecting board 51, the first hinge 56a, the second connecting board 52, the second hinge 56b, the third connecting board 53, the third hinge 56c, and the main body 54 which is an approximate rectangular member in an approximate thick plate integrally made of synthetic plastic.

As shown in Fig. 3 and Fig. 4, the floorboard 5 is designed for shifting the position of the main body 54 in either position of an upper portion or a lower portion of the concave portion for storage 4 according to its use. As shown in Fig. 3, the floorboard 5 is designed such that the upper surface (as referred to Fig. 1) of the main body 54 and the floor's bottom surface 1c is in a plane, in a case where the floorboard type 54 is displaced on the front and upper support 4b and the rear and upper support 4c to be at an upper position. As shown in Fig. 4, the front end 54a of the main body 54 is put on the front and lower support 4d and the rear end 54b of the main body 54 is put on the rear and lower support 4e. Then, the floorboard 5 is designed for displacing the floorboard type 54 in the lower portion of the concave portion for storage 4 and using in the floorboard type 54 as exposed from the floor's bottom surface 1c (as referred to Fig. 1).

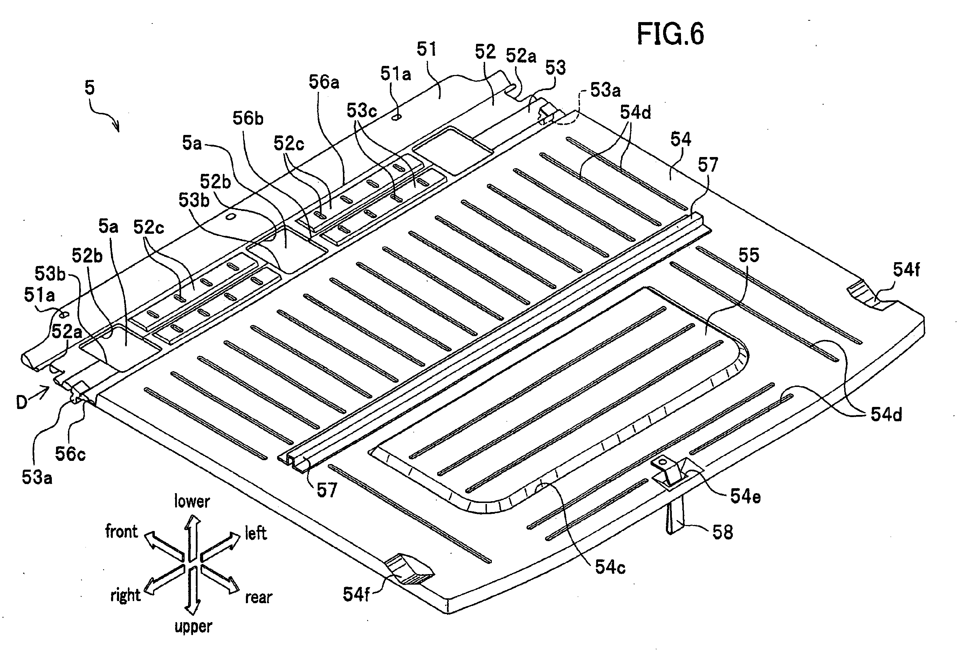

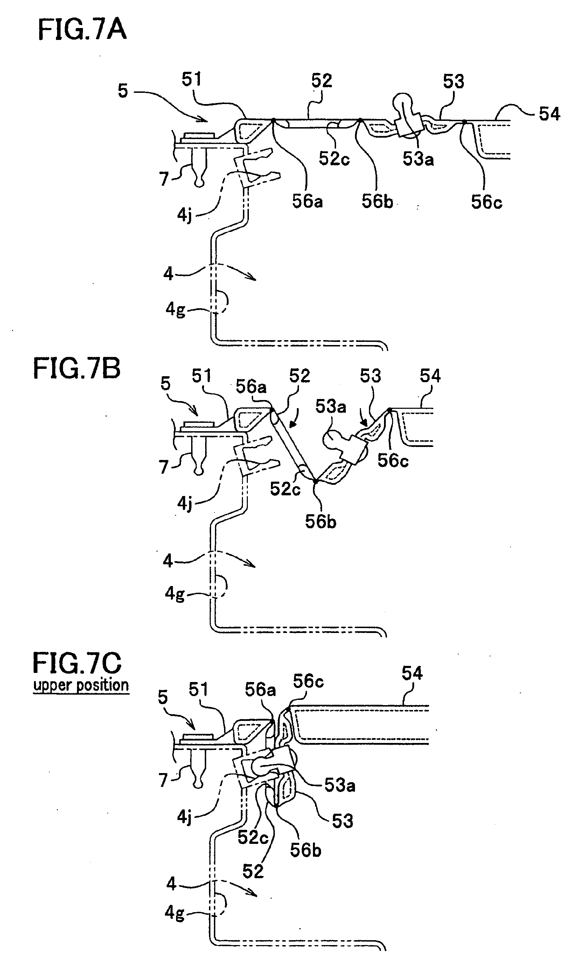

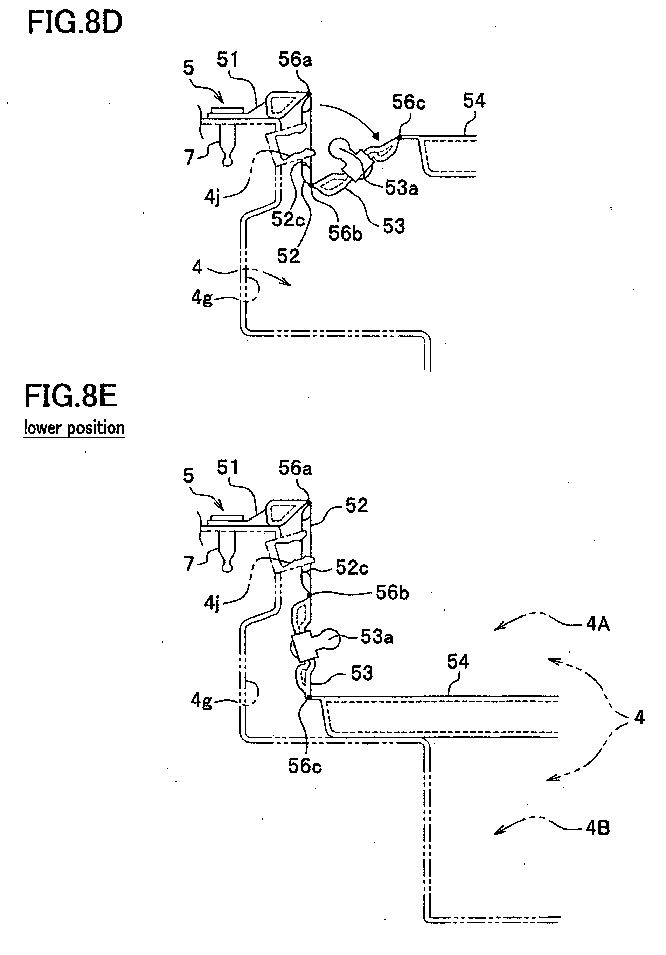

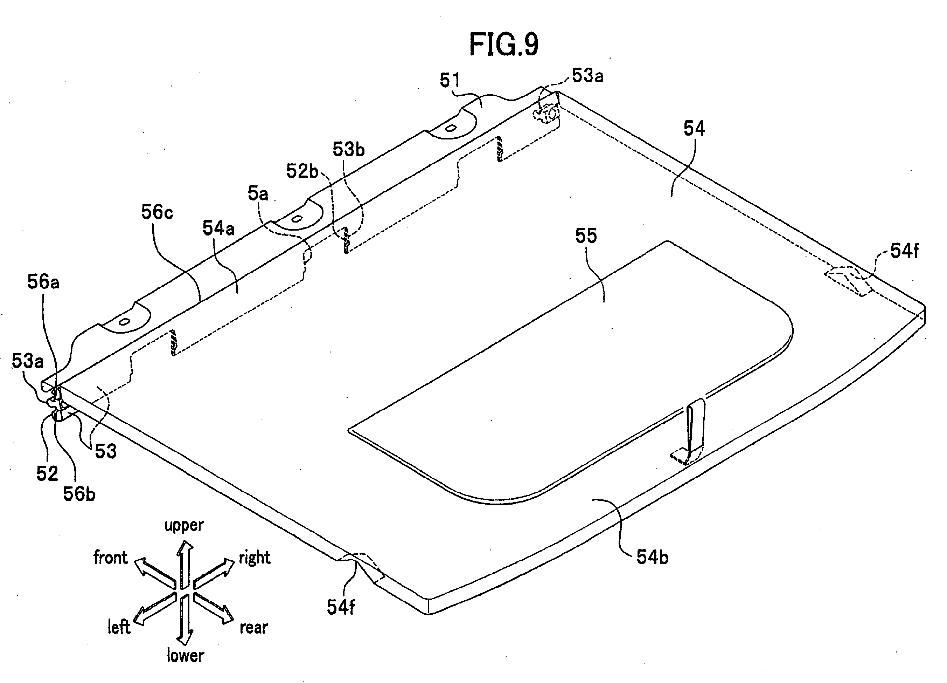

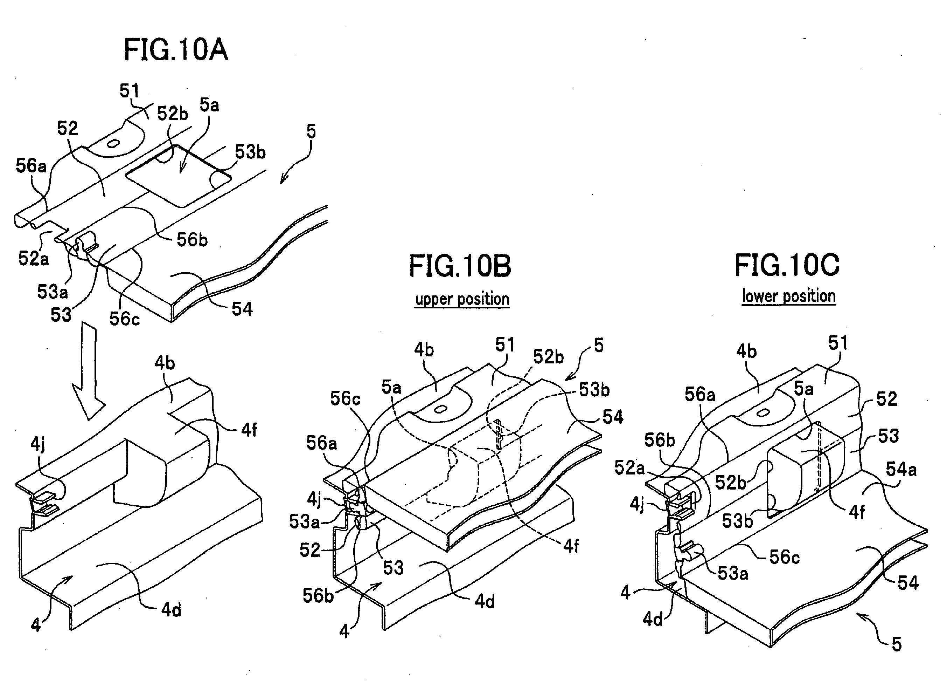

Fig. 6 is a view showing a storage device for vehicles relating to an embodiment of the invention, and a perspective view of the floorboard as seen from the bottom surface thereof. Fig. 7 is a substantial portion of enlarged side view showing the use of the floorboard as seen in the direction of an arrow (D-direction) in Fig. 6. Fig. 7A is a view showing the developed condition of the floorboard, Fig. 7B is a view showing the folding condition to overlap the second connecting board and the third connecting board, and Fig. 7C is a view showing the floorboard displaced at an upper position. Fig. 8D is an essential portion of enlarged side view showing the condition, in a case where the holding portion as seen in the direction of an arrow (D-direction) in Fig. 6 detaches the engaging portion. Fig. 8E is an essential portion of enlarged side view showing the condition displaced at a lower position. Fig. 9 is a view showing the storage device for vehicles relating to an embodiment of the invention to be a perspective view showing the condition of the floorboard displaced at an upper position. Fig. 10 is a view showing the relationship between the opening and the support of the floorboard in the storage device for vehicles relating to an embodiment of the invention. Fig. 10A is an essential portion of exploded perspective view showing the developed condition of the floorboard, Fig. 10B is an essential portion of perspective view showing the floorboard displaced at an upper position, and Fig. 10C is an essential portion of perspective view showing the floorboard displaced at a lower position.

### Constitution of the first connecting board

As shown in Fig. 2, the first connecting board 51 is a thick-plate member extending long in the width of vehicle as displaced in the front end of the floorboard 5. The central, left and right ends of the floorboard 5 are provided with a hole 51a for inserting the securing means 7 (as referred to Fig. 3A and 3B) for securing the first connecting board 51 to the cargo room 1d.

### Constitution of the second connecting board

As shown in Fig. 6 to Fig. 8, the second connecting board 52 is a member for connecting rotatably through the first hinge 56a (hinge 56) behind the first connecting board 51, and composed of a thick-plate member extending long in the width of vehicle. The second connecting board 52 is provided with the notched grooves 52a at both ends, half openings 52b at center and both ends, and ruggedness for reinforcement 52c between the half openings 52b.

The second connecting board 52 and the third connecting board 53 are connected by the second hinge 56b to be bendable downwards. The upper surface of the second connecting board 52 and the upper surface of the third connecting board 53 are mutually overlapped in case of the bending thereof. The opening 5a for enabling to insert the support table 4f in the second connecting board 52 and the third connecting board 53 is consecutively formed to range from the second connecting board 52 to the third connecting board 53.

As shown in Fig. 6, the notched groove 52a is at a position for loosely inserting between the holding portion 4j and the engaging portion 53a, in a case where the second connecting board 52 and the third connecting board 53 are mutually overlapped by the bending of the second hinge 56b. (as referred to Fig. 7C)

The half opening 52b is composed of a notched portion like U-shape (Japanese letter "⊐"-shape) for forming one opening 5a together with the half opening 53b of the below-described third connecting board 53. The half opening 52b and 53b form a rectangular opening 5a, in a case where the floorboard 5 is developed as shown in Fig. 10A and the floorboard 5 is displaced at a lower position as shown in Fig. 10C. As shown in Fig. 10C, the opening 5a is engaged with the support table 4f in case of a lower position of the floorboard 5. As shown in Fig. 9 and Fig. 10B, the half opening 52b and 53b form a notched portion like U-shape (Japanese letter "⊐"-shape) by contacting both the corresponding faces in case of an upper position of the floorboard 5 each other. As shown in Fig 10B, the half openings 52b, 53b are engaged by the support table 4f at an upper position of the floorboard 5.

### Constitution of the third connecting board

As shown in Fig. 6 to Fig. 8, the third connecting board 53 is a member for rotatably (bendably) connected through the second hinge 56b (hinge 56) behind the second connecting board 52, and composes of the thick-plate member extending long in the width of vehicle. The third connecting board 53 is provided with the engaging portion 53a at both ends, the half openings 53b at center and both ends, and the ruggedness for reinforcement 53c between the half openings 53b, respectively.

The engaging portion 53a is a projection for engaging with the holding portion 4j formed in the front inner wall (longitudinal wall portion) 4g of the concave portion for storage 4 to project on the upper surface side of both ends of the third connecting board 53. The engaging portion 53a is designed for detaching from the holding portion 4j at the time of pulling-out, in a case where the tip of the engaging portion 53a formed like a bulb-shape engages with the holding portion 4j at the time of the pressing-in.

### Constitution of the main body

The main body 54 is a member for rotatably (bendably) connected through the third hinge 56c (hinge 56) behind the third connecting board 53, and composes of a thick plate extending long in the width of vehicle. As shown in Fig. 2, the main body 54 is constituted such that the front end 54a thereof is put on the support table 4f and the rear end 54b is supported by the rear and upper support 4c, in a case where the main body 54 is disposed at an upper position of the concave portion for storage 4. The main body 54 is constituted such that the front end 54a thereof is put on the front and lower support 4d, the rear end 54b thereof is supported by the rear and lower support 4e, and the fitting groove 54f is supported by the fitting portion 40, in a case where the main body 54 is displaced at a lower position of the concave portion for storage 4.

As shown in Fig. 2 and Fig. 6, the main body 54 is provided with a hole for mounting lid 54c, the ruggedness for reinforcement 54d, a member for reinforcement 57, a hole 54e for mounting opening-or-closing belt 58, and the fitting groove 54f.

The hole for mounting lid 54c is a hole for mounting the child lid 55 in the main body 54.

The ruggedness for reinforcement 54d is a ruggedness formed to improve the intensity of the main body 54, and formed on the whole lower surface of the main body 54.

The member for reinforcement 57 extends in the width of vehicle on the center of the lower surface of the main body 54. The member for reinforcement 57 is a member bent like U-shape (Japanese letter "⊐"-shape) as seen from the side, to form a closed cross-sectional together with the lower surface of the main body 54.

The hole for mounting opening-or-closing belt 54e is a hole for mounting the opening-or-closing belt 58 for holding by hand, as lifting up the main body 54. The hole for mounting opening-or-closing belt 54e is mounted to bore in the center of the rear end 54b of the floorboard 54.

The fitting groove 54f is a groove for inserting into the fitting portion 4o formed at the left and right ends of the inner bottom surface 4m of the concave portion for storage 4, and formed at left and right ends of the lower surface of the floorboard 54. The fitting groove 54f is for support to mount without wobbling and not to move in the front and rear direction, even if the main body is placed other than the prescribed position of the inner bottom surface thereof.

### Constitution of the child lid

The child lid 55 is a thick-plate lid member for detachably attached to the hole for mounting lid 54c of the main body 54. The child lid 55 is designed for taking out or storing cargos in the concave portion for storage 4 from the hole for mounting lid 54c by opening the child lid 55 without opening the main body 54, in a case where the concave portion for storage 4 is closed at an upper or lower position by the floorboard 5.

### Constitution of the hinge

As shown in Fig. 7A to 7C and Fig. 8D, 8E, the hinge 56 is a hinge for bending rotatably the the second connecting board 52, the third connecting board 53, and the main body 54 in the front and rear direction relative to the first connecting board 51 fixed in the cargo room 1d in the floorboard 5. The hinge 56 is integrally formed to be thin-film synthetic plastic, for example, between the first connecting board 51 and the second connecting board 52, between the second connecting board 52 and the third connecting board 53, and between the third connecting board 53 and the main body 54.

The first hinge 56a is formed between the first connecting board 51 and the second connecting board 52. The second hinge 56b is mounted between the second connecting board 52 and the third connecting board 53. The third hinge 56c is mounted between the third connecting board 53 and the main body 54.

### Function of the storage device for vehicles

Next, the function of the storage device for vehicles relating to an embodiment of the invention will be described as referring to Fig. 1 to Fig. 10.

At first, it will be described in a case where the floorboard 5 is displaced at an upper position of the concave portion for storage 4.

In a case where the floorboard 5 is displaced at an upper position of the concave portion for storage 4, for example, the floorboard 5 as developed (as shown in Fig. 7A) is bent to move the second hinge 56b to the lower (as shown in Fig. 7B), then to be mutually overlapped at the face contacting between the upper surface of the second connecting board 52 and the upper surface of the third connecting board 53 (as shown in Fig. 7C). The engagement between the engaging portion 53a and the holding portion 4j keep a pile of the second connecting board 52 and the third connecting board 53.

As shown in Fig. 10B, half opening 52b of the second connecting board 52 and half opening 53b of the third connecting board 53 are mutually piled to be notched like U-shape (Japanese letter "⊐"-shape). As shown in Fig. 3A, the front end 54a of the main body 54 is put on the support table 4f, and the rear end 54b of the main body 54 is put on the rear and upper support 4c. Then, the floorboard 5 is arranged to be in the same plane together with the floor's bottom surface 1c (as referred to Fig. 1).

Various cargos are put on the floorboard 5. In the concave portion for storage 4 under the floorboard 5, the upper concave portion for storage 4A is communicated with the lower concave portion for storage 4B so that the space for storage will become large in the up-or-down direction. When the child lid 55 is opened or the main body 54 is opened by pulling up the opening-or-closing belt 58, cargos in the concave portion for storage 4 may be stored or taken out.

Next, it will be described in a case where the floorboard 5 is displaced at a lower position of the concave portion for storage 4.

In a case where the floorboard 5 is displaced at a lower position of the concave portion for storage 4, for example, the floorboard 5 as displaced at an upper position (as shown in Fig. 7C) is drawn back to bend the second hinge 56b as shown in Fig. 8D and then to become a condition shown in Fig. 8E such that the upper surface of the second connecting board 52 goes away from the upper surface of the third connecting board 53. Then, the engaging portion 53a is detatched from the holding portion 4j.

As shown in Fig. 10C, the second connecting board 52 and the third connecting board 53 are rotated downwards around the first hinge 56a to move the front end 54a of the main body 54 in the side of the front inner wall 4g, such that the main body 54 is put on the front and lower support 4d.

Then, the second connecting board 52 and the third connecting board 53 are hanging down around the first hinge 56a as a pivot. The notched groove 52a inserts loosely in the holding portion 4j, and the opening 5a inserts loosely in the support table 4f.

Next, as shown in Fig. 4A, the main body 54 is disposed on the rear and lower support 4e such that the rear end 54b of the main body 54 is inserted into the notched portion 4n of the rear inner wall 4k.

The front end 54a of the floorboard 54 is put on the front and lower support 4d, and the whole main body 54 is horizontally displaced near the inner bottom surface 4m of the concave portion for storage 4 (as shown in Fig. 2) such that the main body 54 is displaced at a lower position as shown in Fig. 4.

In a case that the main body 54 is displaced at a lower position, that is, a middle position of the concave portion for storage 4, the concave portion for storage 4 is separated into the upper concave portion for storage 4A and the lower concave portion for storage 4B. That is, the main body 54 displaced at a lower position functions as a bottom plate of the upper concave portion for storage 4A as well as a lid member for closing the upper opening of the lower concave portion for storage 4B.

The upper concave portion for storage 4A has no floorboard 5 to be a concave for going down by one step from the floor's bottom surface 1c. Various cargos can be put on the main body 54 in the upper concave portion for storage 4A. The lower concave portion for storage 4B of the floorboard 54 is designed for taking cargos in or out by opening the child lid 55 or the main body 54.

Accordingly, the floorboard 5 is bendably mounted by the hinge 56 among the second connecting board 52, the third connecting board 53, and the main body 54 relative to the first connecting board 51. Therefore, the main body 54 can be appropriately shifted at either an upper position or a lower position of thereof according to loading conditions of cargos by folding down or stretching the second connecting board 52 and the third connecting board 53.

At shifting the position, the notched portion 52a for avoiding the holding portion 4j in the second connecting board 52 is formed, and the opening 5a for avoiding by inserting the support table 4f into the connecting portion in the second connecting board 52 and the third connecting board 53 is also formed. Then, the switching between an upper position and lower position of the floorboard 5 can be smoothly shifted as the support table 4f not existed, even though a depth of the concave portion for storage 4 is small.

### Modification

The present invention is not limited to the above embodiment, it is understood that the present invention can be changed or modified in the scope of the technical idea and the changed or modified invention can be also extended therein.

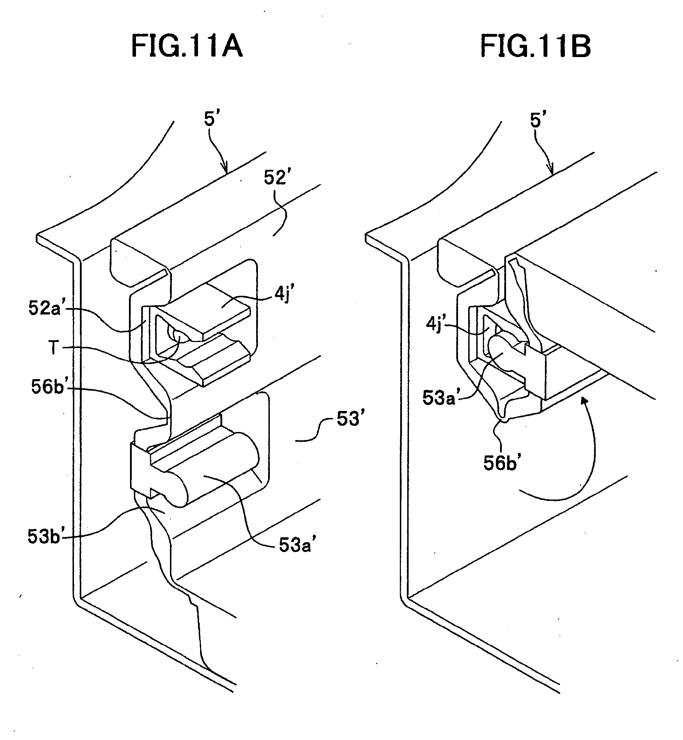

Fig. 11 is a view showing a modification of the storage device of vehicles relating to the present invention. Fig. 11A is an essential portion of enlarged perspective view showing the floorboard displaced at a lower position, and Fig. 11B is an essential portion of enlarged perspective view showing the floorboard at an upper position.

As shown in Fig. 7A, B, C, Fig. 8D, E, and Fig. 10A, B, C, although the floorboard 5 is held at an upper position or a lower position such that the engaging portion 53a mounted at both ends of the third connecting board 53 of the floorboard 5 is detachably mounted to the holding portion 4j as mounted in the front inner wall 4g of the concave portion for storage 4 and exposed from the notched groove 52a of the second connecting board 52, the present invention is not limited thereto.

For example, as shown in Fig. 11A, 11B, the holding portion 4j, may be secured to the second connecting board 52 by fastening means T such as pin, such that it projects on the concave 52a formed at left and right ends of the second connecting board 52 of the floorboard 5'.

In this case, the holding portion 53a is secured to the third connecting board 53 so as to project on the concave 53b formed at left and right ends of the third connecting board 53'. As well as the above embodiment, in a case where the third connecting board 53 is rotated to contact the surface of the second connecting board 52 around the second hinge 56b', the engaging portion 53a may be engaged with the holding portion 4j . In this way, the floorboard 5' can be displaced at a lower position as shown in Fig.11A and an upper position as shown in Fig. 11B as well as the above embodiment.

### Anothoer modification

For example, although the above embodiment gave a wagon-type vehicle 1 as an example, it is understood that the invention can also be applied to a sedan-type automobile.

The floorboard 5 is not limited by being one made of synthetic plastic material, for example, can be made of metal, wood, one assembling material thereof.

The hinge 56 may be a member for properly bending the second connecting board 52, the third connecting board 53, and the main body 54, respectively. The separate hinge member different from the floorboard 5 may be displaced between the first connecting board 51 and the second connecting board 52, between the second connecting board 52 and the third connecting board 53, and between the third connecting board 53 and the main body 54, respectively.

## Claims

1. A storage device for vehicles with a floorboard (5) as being coverable over a concave portion for storage (4) provided in a cargo room (1d),
the floorboard (5) comprises
a main body (54) as being coverable over the concave portion for storage, and
a connecting body as one end thereof being connected to a main hinge (56b) arranging at an approximately middle position in the depth direction of a wall of the concave portion for storage (4), and the other end thereof being connected to the main body (54) by a hinge,
so as to be supported by switching the position thereof between an upper position supported at a supporting portion formed in an upper edge side of the concave portion for storage (4) and a lower position supported by a bottom surface side of the concave portion for storage (4),
**characterized in that**
the floorboard (5) comprises a first connecting body (51) mounted in the cargo room (1d), a second connecting body (52) connected by a first hinge (56a) to the first connecting body (51) and the connecting body as a third connecting body (53) connected by a second hinge to the second connecting body (52),
the main body (54) is connected by the hinge as a third hinge (56c) to the third connecting body (52), wherein the first connecting body (51), the second connecting body (52), the third connecting body (53) and the main body (54) are serially arranged,
the second hinge arranged between the second connecting body (52) and the third connecting body (53) is defined as a main hinge (56b) to be movable by swinging the second connecting body (52) relative to the first connecting body (51),
thereby the floorboard (5) being combined with the cargo room (1d) as the main hinge (56b) being movable relative to the supporting portion.

2. A storage device for vehicles described in Claim 1,
wherein the second connecting body (52) and the third connecting body (53) are downwards bendably connected by the main hinge so as to overlap an upper surface of the second connecting body (52) and an upper surface of the third connecting body (53) at the time of bending.

3. A storage device for vehicles described in Claim 2,
wherein an opening for inserting a support table (4f) is provided astride the second connecting body (52) and the third connecting body (53).

4. A storage device for vehicles described in Claim 1 or Claim 2,
wherein a fitting portion (4o) fitting in a fitting groove (54f) of a main body (54) is provided in an inner bottom surface of the concave portion for storage (4).

5. A storage device for vehicles described in any of Claim 1 to Claim 3,
wherein a holding portion (4j) of the third connecting body (53) is provided on an inner wall of the concave portion for storage (4) or the second connecting body (52).

6. A storage device for vehicles described in any of Claim 1 to Claim 4,
wherein an engaging portion (53a) of the holding portion (4j) is provided on an upper surface of the third connecting body (53).

## Patentansprüche

1. Aufbewahrungsvorrichtung für Fahrzeuge mit einem Bodenbrett (5), welches abdeckbar über einem konkaven Abschnitt zur Aufbewahrung ist, welcher in einem Ladungsraum (1d) vorgesehen ist,
wobei das Bodenbrett (5) umfasst
einen Hauptkörper (54), welcher abdeckbar über dem konkaven Abschnitt zur Aufbewahrung ist, und
einen Verbindungskörper, wovon ein Ende mit einem Hauptgelenk (56b) verbunden ist, welches an ungefähr einer mittleren Position in der Tiefenrichtung einer Wand des konkaven Abschnitts zur Aufbewahrung (4) angeordnet ist, und wobei das andere Ende davon mit dem Hauptkörper (54) durch ein Gelenk verbunden ist,
um so durch Umschalten der Position davon zwischen einer oberen Position, welche an einem Lagerabschnitt gelagert ist, welcher in einer oberen Kantenseite des konkaven Abschnitts zur Aufbewahrung (4) und einer unteren Position, welche durch eine Bodenoberflächenseite des konkaven Abschnitts zur Aufbewahrung (4) gelagert ist, gelagert zu sein,
**dadurch gekennzeichnet, dass**
das Bodenbrett (5) einen ersten Verbindungskörper (51), welcher in dem Ladungsraum (1d) montiert ist, einen zweiten Verbindungskörper (52), welcher durch ein erstes Gelenk (56a) mit dem ersten Verbindungskörper (51) verbunden ist, und den Verbindungskörper als einen dritten Verbindungskörper (53) umfasst, welcher durch ein zweites Gelenk mit dem zweiten Verbindungskörper (52) verbunden ist,
wobei der Hauptkörper (54) durch das Gelenk als ein drittes Gelenk (56c) mit dem dritten Verbindungskörper (52) verbunden ist, wobei der erste Verbindungskörper (51), der zweite Verbindungskörper (52), der dritte Verbindungskörper (53) und der Hauptkörper (54) seriell angeordnet sind,
wobei das zweite Gelenk, welches zwischen dem zweiten Verbindungskörper (52) und dem dritten Verbindungskörper (53) angeordnet ist, als ein Hauptgelenk (56b) definiert ist, um durch Schwingen des zweiten Verbindungskörpers (52) relativ zu dem ersten Verbindungskörper (51) bewegbar zu sein,
wobei **dadurch** das Bodenbrett (5) mit dem Ladungsraum (1d) kombiniert wird, während das Hauptgelenk (56b) relativ zu dem Lagerabschnitt bewegbar ist.

2. Aufbewahrungsvorrichtung für Fahrzeuge, wie in Anspruch 1 beschrieben,
wobei der zweite Verbindungskörper (52) und der dritte Verbindungskörper (53) verbunden durch das Hauptgelenk nach unten biegbar sind, um so eine obere Oberfläche des zweiten Verbindungskörpers (52) und eine obere Oberfläche des dritten Verbindungskörpers (53) zu der Zeit des Biegens zu überlappen.

3. Aufbewahrungsvorrichtung für Fahrzeuge, wie in Anspruch 2 beschrieben,
wobei eine Öffnung zum Einführen eines Lagertischs (4f) rittlings zu dem zweiten Verbindungskörper (52) und dem dritten Verbindungskörper (53) vorgesehen ist.

4. Aufbewahrungsvorrichtung für Fahrzeuge, wie in Anspruch 1 oder Anspruch 2 beschrieben,
wobei ein Passabschnitt (4o), welcher in eine Passnut (54f) eines Hauptkörpers (54) passt, in einer inneren Bodenoberfläche des konkaven Abschnitts zur Aufbewahrung (4) vorgesehen ist.

5. Aufbewahrungsvorrichtung für Fahrzeuge, wie in irgendeinem von Anspruch 1 bis Anspruch 3 beschrieben,
wobei ein Halteabschnitt (4j) des dritten Verbindungskörpers (53) auf einer inneren Wand des konkaven Abschnitts zur Aufbewahrung (4) oder des zweiten Verbindungskörpers (52) vorgesehen ist.

6. Aufbewahrungsvorrichtung für Fahrzeuge, wie in irgendeinem von Anspruch 1 bis Anspruch 4 beschrieben,
wobei ein Eingriffsabschnitt (53a) des Halteabschnitts (4j) auf einer oberen Oberfläche des dritten Verbindungskörpers (53) vorgesehen ist.

## Revendications

1. Dispositif de stockage pour véhicules avec un panneau plancher (5) tel que pouvant couvrir une partie concave de stockage (4) prévue dans un coffre (1d),
le panneau plancher (5) comprenant
un corps principal (54) tel que pouvant couvrir la partie concave de stockage, et
un corps de jonction, tel qu'une extrémité de celui-ci est raccordée à une articulation principale (56b) agencée à une position approximativement intermédiaire dans la direction de profondeur d'une paroi de la partie concave de stockage (4), et l'autre extrémité de celui-ci est raccordée au corps principal (54) par une articulation,
de sorte à être supporté en changeant sa position entre une position supérieure supportée au niveau d'une partie de support formée dans un bord latéral supérieur de la partie concave de stockage (4) et une position inférieure supportée par un côté de surface inférieur de la partie concave de stockage (4),
**caractérisé en ce que**
le panneau plancher (5) comprend un premier corps de jonction (51) monté dans le coffre (1d), un deuxième corps de jonction (52) relié par une première articulation (56a) au premier corps de jonction (51) et le corps de jonction en tant que troisième corps de jonction (53) relié par une seconde articulation au deuxième corps de jonction (52),
le corps principal (54) est relié par l'articulation en tant que troisième articulation (56c) au troisième corps de jonction (52), le premier corps de jonction (51), le deuxième corps de jonction (52), le troisième corps de jonction (53) et le corps principal (54) étant agencés en série,
la seconde articulation agencée entre le deuxième corps de jonction (52) et le troisième corps de jonction (53) est définie comme une articulation principale (56b) mobile par pivotement du deuxième corps de jonction (52) par rapport au premier corps de jonction (51),
le panneau plancher (5) étant ainsi combiné avec le coffre (1d) puisque l'articulation principale (56b) est mobile par rapport à la partie de support.

2. Dispositif de stockage pour véhicules selon la revendication 1,
dans lequel le deuxième corps de jonction (52) et le troisième corps de jonction (53) sont reliés par flexion vers le bas par l'articulation principale de sorte à chevaucher une surface supérieure du deuxième corps de jonction (52) et une surface supérieure du troisième corps de jonction (53) au moment de la flexion.

3. Dispositif de stockage pour véhicules selon la revendication 2,
dans lequel une ouverture pour insertion d'une table de support (4f) est prévue à cheval sur le deuxième corps de jonction (52) et le troisième corps de jonction (53).

4. Dispositif de stockage pour véhicules selon la revendication 1 ou la revendication 2,
dans lequel une partie de fixation (4o) venant se fixer dans une gorge de fixation (54f) d'un corps principal (54) est prévue dans une surface inférieure interne de la partie concave de stockage (4).

5. Dispositif de stockage pour véhicules selon l'une quelconque des revendications 1 à 3,
dans lequel une partie de maintien (4j) du troisième corps de jonction (53) est prévue sur une paroi interne de la partie concave de stockage (4) ou du deuxième corps de jonction (52).

6. Dispositif de stockage pour véhicules selon l'une quelconque des revendications 1 à 4,
dans lequel une partie de mise en prise (53a) de la partie de maintien (4j) est prévue sur une surface supérieure du troisième corps de jonction (53).
